Europäisches Patentamt

European Patent Office

Office européen des brevets

(11) Publication number: **0 033 059**
**B1**

# EUROPEAN PATENT SPECIFICATION

(45) Date of publication of patent specification: **02.05.85**

(21) Application number: **80830100.6**

(22) Date of filing: **27.11.80**

(51) Int. Cl.⁴: **G 01 S 7/28,** G 01 S 13/44, G 01 S 13/52

(54) **System for the extraction and integration of elevation data necessary for the calculation of height in a three-dimensional radar.**

(30) Priority: **25.01.80 IT 4772180**

(43) Date of publication of application:
**05.08.81 Bulletin 81/31**

(45) Publication of the grant of the patent:
**02.05.85 Bulletin 85/18**

(84) Designated Contracting States:
**DE FR GB NL SE**

(56) References cited:
**US-A-3 274 591**
**US-A-3 942 177**
**US-A-4 137 533**

(73) Proprietor: **SELENIA INDUSTRIE ELETTRONICHE ASSOCIATE S.p.A.**
**Via Tiburtina, KM 12.400**
**I-00131 Roma (IT)**

(72) Inventor: **Piercarlo, Giustiniani**
**Via Luigi Capuana, 10**
**Roma (IT)**

(74) Representative: **Gustorf, Gerhard, Dipl.-Ing.**
**Mühlenstrasse 1**
**D-8300 Landshut (DE)**

Courier Press, Leamington Spa, England.

**Description**

The present invention relates to a device for calculating the elevation in a three-dimensional MTI-radar comprising two antenna elements, means for deriving in-phase components and in-quadrature components from two vectors received from the antenna elements, and calculating means for extracting the elevation from these components.

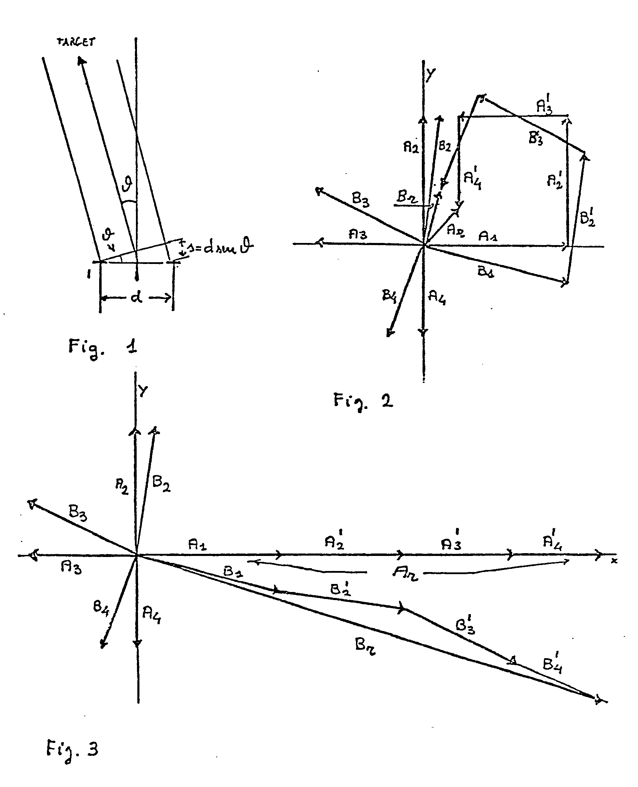

One of the now most widely used methods for the extraction of elevation data, known as "Monopulse" and fully described on M. I. Skolnik—Radar Handbook—McGraw—Hill 1970, consists in the use of an antenna equivalent to a pair of radiating elements placed at a distance d (Fig. 1). If a distant target is seen in the vertical plane, with an angle u with respect to the axis of the segment of length d which joins the two radiating elements, the difference s=d sin u between the two paths of the signal results in a difference of phase φ between the signals received by the two elements, with

$$\varphi = \frac{2\pi}{\lambda} \, d \, \sin u$$

The elevation u can be obtained, however, from the measurement of the phase shift φ by applying the formula

$$u = \text{arc sin} \, \frac{\varphi\lambda}{2\pi d}$$

which for small angles can be approximated by:

$$u = \frac{\varphi\lambda}{2\pi d}$$

A method now widely in use for obtaining the angle φ in coherent and non coherent radars consists in obtaining the sum S and difference Δ from the two received signals A and B. The ratio between the amplitudes of Δ and S furnishes the tangent of an angle ψ equal to φ/2.

In the coherent radars i.e. with MTI receivers in which both the amplitude and phase of the received signals are detected, the phase shift φ can be calculated from the components of the two received vectors A and B. These components are the inphase components Ax and Bx and the in quadrature components Ay and By.

The phase shift is calculated by the formula:

$$\text{Tan } \varphi = \frac{A_y \, B_x - A_x \, B_y}{A_x \, B_x + A_y \, B_y}$$

In a similar way one may obtain tan ψ=tan φ/2 starting from the in-phase and in-quadrature components of the vector sum S and resultant R=S+Δ.

In a coherent radar realised with conventional techniques the calculation must be made for every useful signal received; further all the measurements of tan φ obtained in the different repetition periods which constitute the time on target must be integrated, i.e. summed to *obtain the average value* of tan ψ.

From the integrated data of tan φ the angle φ and the elevation u with respect to the axis of the beam are obtained for the extracted target.

This technique has basically two disadvantages:

1. The necessary circuitry must allow for four multiplications, one division and two summings for each period of sampling of a duration of between 0,5 and 1 micro second.

2. With the integration of the values of the tangent all information relative to the amplitudes of the single vectors is lost, i.e. in the confidence of the single measurements. Therefore an unweighted average is effected with a consequent degradation of the average standard deviation in the integrated value with respect to the optimum in the case of fluctuations of the input signal.

A technique to overcome these disadvantages consists in effecting the integration of the elevation data received in the different repetition periods constituting the time on target at the level of the components of vectors A and B or S and R rather than at the level of tan φ and effecting the calculation of tan φ on the integrated components of the extracted target.

2

TABLE 1
Reduction to the first quadrant

| Original vector phase | Conditions verified | Rotation to be imposed (clockwise) | X' or Y' components of the rotated vector |
|---|---|---|---|
| $0 \leq \varphi \leq 90$ | $X \geq 0$ | $0°$ | $'=X$ |
| | $Y \geq 0$ | | $Y'=Y$ |
| $90 \leq \varphi \leq 180$ | $X < 0$ | $90°$ | $'=Y$ |
| | $Y \geq 0$ | | $Y=-X$ |
| $180 < \varphi < 270$ | $X < 0$ | $180°$ | $X'=-X$ |
| | $Y < 0$ | | $Y'=-Y$ |
| $270 \leq \varphi < 0$ | $X \geq 0$ | $270°$ | $X'=-Y$ |
| | $Y < 0$ | | $Y'=X$ |

However, this solution is not directly applicable since the phase of the received vectors varies at every repetition period since the targets possess a radial velocity which is not null and thus due to the variation of phase, the sum of the components received in the different repetition periods tends to 0 as shown in Fig. 2.

To overcome this difficulty the invention which is the subject of the patent makes use of the technique of imparting to each pair of vectors A and B received in each repetition period, a rotation equal in absolute value and opposite in sign to the phase assumed from time to time by vector A. In this way the pairs of vectors A' and B', obtained from A and B after the rotation will all be characterized by having the vector A' with phase null and the vector B' with phase φ not considering noise superimposed on the measurement. As shown in Fig. 3, with such a technique the sum of the vectors A' and vectors B' gives rise to two vectors A's and B's whose modulus is equal respectively to the sum of the moduli of vectors A' and the sum of the moduli of vectors B'.

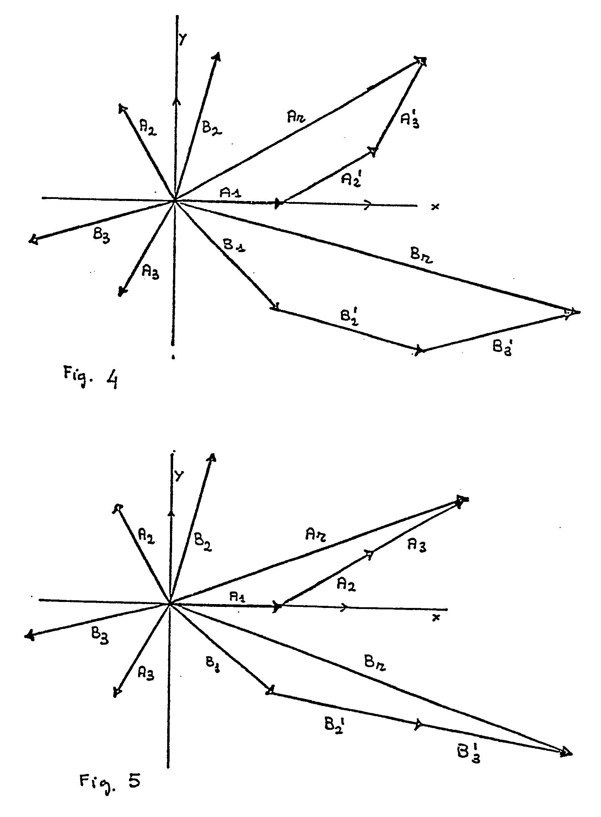

In practice it is not necessary to apply a rotation of phase exactly equal and opposite to the phase of vector A to the pair of vectors A and B, but it is only necessary to apply a sufficient rotation to bring the vector A in the 1st quadrant as indicated in Fig. 4 or else in the 1st octant, as indicated in Fig. 5. The technique referred to as "reduction to the first quadrant" determines the pair of integrated vectors whose modulus is on average 0,91 dB lower with respect to the theoretical maximum obtainable with the technique illustrated in Fig. 3.

With the technique referred to as "reduction to the first octant" this loss is reduced to an average value of 0,26 dB.

With the first of the two techniques the operations required for the rotations are reduced to changes of sign and/or exchanges of the components, as indicated in Table 1. The second technique allows on the other hand, the execution of additions subtractions and multiplications by means of the constant $1/\sqrt{2}$ as indicated in Table 2.

If the constant $1/\sqrt{2}$ is substituted with the constant 1 a simplification of the circuitry is obtained at the cost of a deterioration of the average standard deviation of the integrated components of 1%, which is negligible.

The use of said second technique results in a reduction of the operations required for every period of sampling to:

2 complementations or exchanges of components and 2 additions in the case of reduction to the 1st quadrant;

1 comparison, 2 multiplications by the coefficients 0, +1 and −1, and 4 additions in the case of reduction to the 1st octant.

A preferred embodiment will be described hereinafter with reference to the attached drawings, in which:

Fig. 1 shows the principle of operation of the phase radar i.e. the utilising of an antenna formed by a pair of radiating elements placed at a distance d.

Fig. 2 shows how the direct integration of vectors A and B tends to produce zero amplitude integrated vectors due to the vector rotation produced by the Doppler effect where A1, A2, A3 and B1, B2, B3 represent the vectors received in successive repetition periods.

Fig. 3 shows the possibility of integrating the height components by applying a solid rotation such as to bring vector A in coincidence with the X axis to every pair of vectors and then summing the rotated vectors.

3

**0 033 059**

Fig. 4 shows the integration of the height components by the method of reduction to the 1st quadrant where A1, A2, A3 and B1, B2, B3 are the original vectors; Ar and Br are the resultant vectors.

Fig. 5 shows the integration of the height components by the method of reduction to the 1st octant, where A1, A2, A3; B1, B2, B3 are original vectors; Ar and Br are the vectors resulting from the composition of vectors reduced to the 1st octant.

Fig. 6 shows the block diagram of a preferred realisation of the integration logic of the height components. The following parts are emphasized; the logic for determining the rotation to be imposed on the pair of vectors, the circuits which impart the specified rotation, the summers which integrate the rotated components, the integration memories and the output registers.

Fig. 7 shows the timing of the logic operations:—

Fig. 7a shows the basic clock signal C, Fig. 7b shows signal F which marks the two operative phases of a sampling period, processing of the vectors A and B being multiplexed as indicated in Fig. 7c.

Fig. 8 shows the realisation of the logic for the rotation of the height components by means of PROMS.

TABLE 2
Operations of reduction to the first octant

| Original vector phase | Conditions checked | Rotation to be imposed | X' to Y' components of the rotated vector |
|---|---|---|---|
| $0° \leq \varphi \leq 45°$ | $X \geq 0$<br>$Y \geq 0$<br>$X-Y \geq 0$ | $0°$ | $X'=X$<br><br>$Y'=Y$ |
| $45° < \varphi < 90°$ | $X \geq 0$<br>$Y \geq 0$<br>$X-Y < 0$ | $45°$ | $X'=(1/\sqrt{2})\,(X+Y)$<br><br>$Y'=(1/\sqrt{2})\,(Y-X)$ |
| $90° < \varphi \leq 135°$ | $X < 0$<br>$Y \geq 0$<br>$X+Y \geq 0$ | $90°$ | $X'=Y$<br><br>$Y'=-X$ |
| $135° < \varphi \leq 180°$ | $X < 0$<br>$Y \geq 0$<br>$X+Y < 0$ | $135°$ | $X'=(1/\sqrt{2})\,(Y-X)$<br><br>$Y'=(1/\sqrt{2})\,(-Y-X)$ |
| $180° < \varphi < 225°$ | $X < 0$<br>$Y < 0$<br>$X-Y < 0$ | $180°$ | $X'=-X$<br><br>$Y'=-Y$ |
| $225° \leq \varphi < 270°$ | $X < 0$<br>$Y < 0$<br>$X-Y \geq 0$ | $225°$ | $X'=(1/\sqrt{2})\,(-X-Y)$<br><br>$Y'=(1/\sqrt{2})\,(X-Y)$ |
| $270° \leq \varphi < 315°$ | $X \geq 0$<br>$Y < 0$<br>$X+Y < 0$ | $270°$ | $X'=-Y$<br><br>$Y'=X$ |
| $315° \leq \varphi < 360°$ | $X \geq 0$<br>$Y < 0$<br>$X+Y \geq 0$ | $315°$ | $X'=(1/\sqrt{2})\,(X-Y)$<br><br>$Y'=(1/\sqrt{2})\,(X+Y)$ |

Each PROM is able to process one octal segment. The three PROM'S which furnish the X component of the rotated vector are programmed in a different way to the PROM'S which furnish the Y component, as specified in Table 2.

It is thus possible to achieve the integration of the pairs of vectors received in successive repetition periods by a 3D radar, these pairs of vectors being formed by the in-phase and in-quadrature components of the signals received from a pair of radiating elements, based on the previous application to the vectors of the pairs of a phase rotation such as to make one of the two vectors of the pair assume, after the rotation, a value of phase within the pre-set limits.

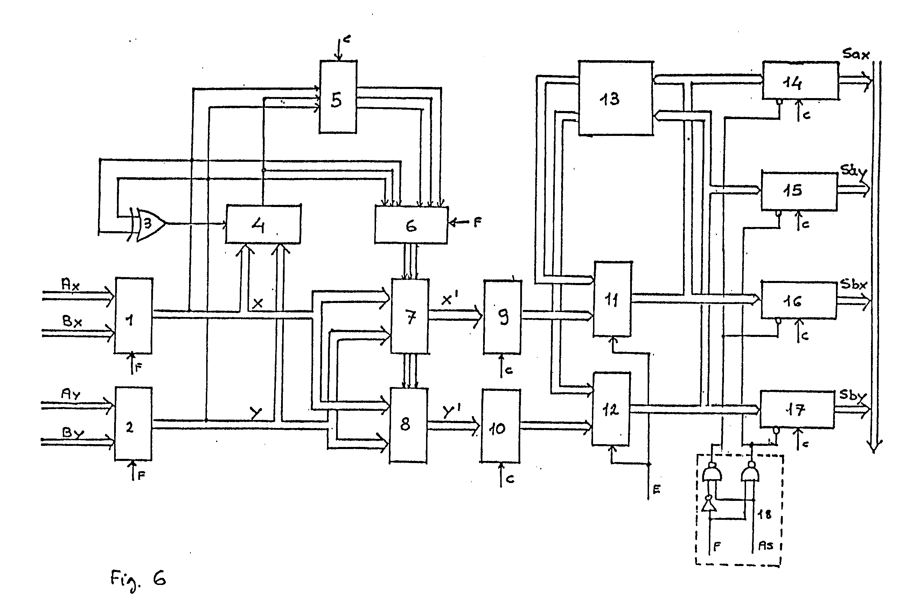

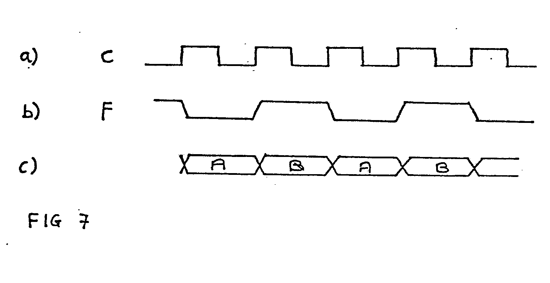

The general principle of operation will now be described in detail with reference to Fig. 6, which shows the block diagram of the preferred realisation of the invention, and to Figures 7a, 7b, 7c which will now be described.

4

The in-phase and in-quadrature components of the two vectors A and B, indicated with the symbols Ax, Ay, Bx and By and represented with 8 bits in 2's complement are presented in parallel at the input of the device at a frequency equal to the sampling frequency of the radar video signal, i.e. between $10^6$ and $2 \times 10^6$ samples per second.

The input components are fed to the two-way selectors 1 and 2 which operate on the in-phase and in-quadrature components respectively and whose function is that of selecting, in relation to the state of signal F, the components relative to vector A or vector B.

In this way all the logic at the output of selectors 1 and 2 is used in time division multiplex to process the components of both the vectors in a cycle of processing in two phases.

In the first phase vector A is processed while in the second phase vector B is processed.

The use of time division in the processing logic allows a further saving of circuitry in addition to that effected by the choice of the algorithm.

Fig. 7 shows the timing waveforms of the processing cycle. From the clock signal C shown in Fig. 7a the signal F is obtained by dividing by 2.

Signal F, shown in Fig. 7b is used to determine the two phases. A period of P defines a cycle of processing as shown in Fig. 7c.

The selectors 1 and 2 select the components of vector A when the signal F is Ø and the components of vector B when the signal F is 1.

The components of vector A are analysed during the first phase by the logic which determines the octant, formed by the exclusive OR gate 3 and the arithmetic logic unit 4 using type 74181 components with 8 parallel bits.

The exclusive OR 3 is used to control the arithmetic unit 4 so that it carries out subtractions when the signs of the components at the output of selectors 1 and 2 are equal and additions when they are different, in accordance with Table 2. The signs sent to the exclusive OR 3 are given by the most significant bit of each component.

The sign of the result of the sum or difference, given by the most significant bit at the output of the logic-arithmetic unit 4, is used, together with the most significant bits of the X and Y components of vector A, to identify the octant to which the vector belongs as indicated in Table 2.

The three bits referred to are used to control both the rotations to be applied to vector A and an equal rotation to be applied to vector B in the next phase of the processing cycle. For this reason the 3 bits are temporarily stored in register 5.

Selector 6, controlled by signal F, controls the logic performing the rotation of the vectors; when F is "0" the control signals are the ones just determined by the components of vector A selected by the selectors 1 and 2, while the memorised control signals, i.e. still relative to vector A, are used when F is 1 and the components selected by the selectors 1 and 2 are those of vector B.

The octant information is utilised to control the two units 7 and 8 which generate the components X' and Y' of the two rotated vectors A and B. Each of the two units 7 and 8 receives both of the components X and Y of the input vector i.e. of A or B depending on the level of signal F and performs an operation of linear combination of the input components according to the weights, 0, +1 and −1 depending on the value of the octant as specified in Table 2.

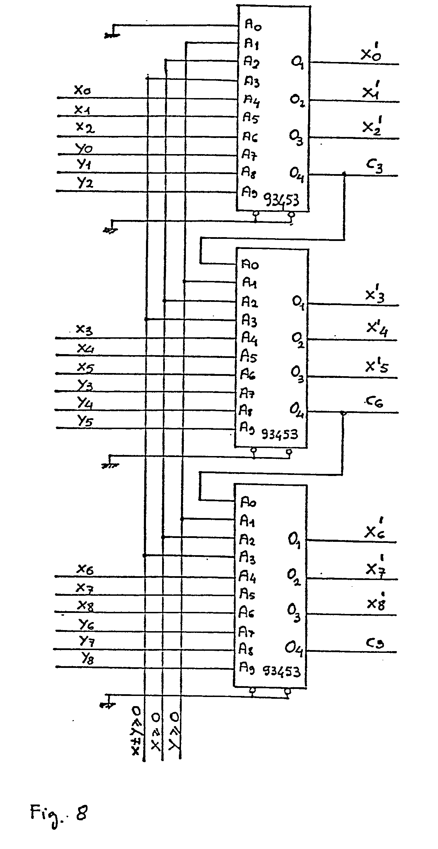

To reduce the amount of circuitry the component rotation units have been realised with 1K word ×4 bit PROMS. Each unit requires 3 PROMS as shown in Fig. 8.

Each PROM receives at the input:

3 bits which indicate the amount of rotation to apply.

3 bits of component X.

3 bits of component Y.

1 carry bit from the previous device
and produces at the output:

3 result bits

1 carry bit for the next device.

The result of the component rotation is expressed in 9 bits since, the multiplication by the factor $1/\sqrt{2}$ not being realized, the maximum absolute value of the results can be $\sqrt{2}$ times greater than the maximum absolute value of the input components.

It must be noted that, to obtain a greater simplicity of the circuit, −X−Y+1 is performed instead of −X−Y. That introduces an error of 1 bit, generally negligible in the cases in which the value of the rotation to be imposed requires this algorithm.

There are two types of PROM, one for the X' component and one for the Y' component, different from one another depending on the correspondence between the octant code and the operation effected, as indicated in Table 2. The two components X' and Y' reduced to the first octant are fed to the two staticizer registers 9 and 10 used to recover the processing delays of the rotation logic and are then transmitted to the 12-bit arithmetic logic units (11 and 12) formed by SN74181 devices.

The unit 11 receives, from the first phase of the processing cycle, the A'x component reduced to the first octant from register 9 and from the memory 13 the partial sum S a x of the A'x components relative to the same target received in the previous periods.

The result produced at the output depends on the state of the target extraction process, resulting from

5

the control signals E produced by a target extraction unit, which is not the subject of this invention, associated with the integration logic.

The correspondence between states of the extraction process, control signals and the operation performed is shown in Table 3.

TABLE 3

| State of extraction process | Input valid | Memory valid | Function realised by logic-arithmetic unit |
|---|---|---|---|
| Rest:<br>— Information memorized non-valid<br>— Input information non-valid | Ø | Ø | Output=Ax |
| First front<br>— Information memorized non-valid<br>— Input information valid | 1 | Ø | Output=Ax |
| Continuation<br>— Memorized information valid Extracted plot, input non-valid | 1 | 1 | Output=Ax+Sax |
| — Memorized information valid<br>— Input information not-valid | Ø | 1 | Output−Sax |

If for the control of the integration unit only the valid input signals and memorized information are used there could be the possibility that the number produced at the output could exceed the capacity of the memory with the consequent phenomena of overflow. With a 12-bit integration and memory unit the overflow cannot occur before having integrated at least 11 valid samples at the maximum level. This value exceeds the normal number of samples in the target illumination time and therefore special overflow logic is not required.

During the second phase of the processing cycle the integration unit 11 operates on the B'x and Sbx inputs relative to the second vector of the couple A' and B'.

In a similar way the integration unit 12 operates during the 2 phases of the cycle on the pairs of inputs A'y, Say and B'y, Sby.

The output of the two integration units besides being sent to the memory 13 to be used in the successive pulse repetition period, is also loaded into the 4 output registers 14—17, if these registers are not occupied, each one having a 12-bit capacity.

The loading and unloading of the output registers is effected by the control signals AS coming from the plot extraction logic 18, which is not the subject of this patent; also the reading of the information relative to the integrated components loaded into the output registers and the successive processing do not form a part of the present invention.

The memory 13 is a digital memory which must be capable of memorizing, for every repetition period, the components Sax, Say, Sbx and Sby of the partial results, relative to all the targets being processed in the repetition period.

**Claims**

1. Device for calculating the elevation in a three-dimensional MTI-radar comprising two antenna elements, means for deriving in-phase components (Ax, Bx) and in-quadrature components (Ay, By) from two vectors (A, B) received from the antenna elements, and calculating means (1—12) for extracting the elevation from these components (Ax, Bx; Ay, By), characterized in that the calculating means comprise means (3, 4) for generating a control signal in dependence on the phase of a first one (A) of these vectors (A, B), means (5 to 8) for rotating both vectors (A, B) in accordance with said control signal such that the phase of the rotated first vector (A') is within predetermined limits, and means (9 to 18) for integrating the respective components (A'x, A'y, B'x, B'y) of the rotated vectors (A', B').

2. Device as claimed in claim 1, characterized in that said means (3, 4) for generating are arranged such that the control signal is indicative of the quadrant of the first vector (A).

3. Device as claimed in claim 1, characterized in that said means (3, 4) for generating are arranged such that the control signal is indicative of the octant of the first vector (A).

4. Device as claimed in one of claims 1 to 3, characterized in that there is provided a time-multiplex circuit comprising two selectors (1, 2) each having two inputs, and a generator (F) controlling both selectors (1, 2), that the respective in-phase components (Ax, Bx) of each vector (A, B) are fed to the inputs of one selector (1), and that the respective in-quadrature components (Ay, By) of each vector (A, B) are fed to the inputs of the other selector 2.

5. Device as claimed in one of claims 1—4, characterized in that the means (3, 4) for generating a control signal in dependence on the phase of the first vector (A), comprise a logic circuit (3, 4) connected to both selectors (1, 2) generating a digital control signal on the basis of the signs of the components and the most significant bits of the first vector (A), and a register (5) for temporarily storing said digital control signal.

6. Device as claimed in claim 5, characterized by a third selector (6), the inputs thereof being connected to the logic circuit (3, 4) and to the register (5), said selector (6) being controlled by the generator (F).

7. Device as claimed in claim 6, characterized in that said means (5 to 8) for rotating both vectors (A, B) comprise two rotation units (7, 8) each connected to the first, second and third selectors (1, 2, 6) for performing an operation of linear combination of the respective in-phase and in-quadrature components (Ax, Bx; Ay, By) in accordance with said control signal.

8. Device as claimed in claim 7, characterized in that each rotation unit (7, 8) consists of a programmable-read-only-memory.

9. Device as claimed in claim 7 or 8, characterized by two registers (9, 10), each register (9, 10) being connected to a respective one of said rotation units (7, 8) for compensating for processing delays of said units (7, 8).

10. Device as claimed in one of claims 6 to 8, characterized in that said means (9 to 18) for integrating comprise two integrating units (11, 12) and a memory (13) for storing partial sums.

**Patentansprüche**

1. Gerät zum Berechnen der Erhöhung in einem dreidimensionalen MTI-Radar mit zwei Antennenelementen, mit einer Einrichtung zum Ableiten der in Phasenrichtung liegenden Komponenten (Ax, Bx) und zum Ableiten der senkrecht zur Phasenrichtung liegenden Komponenten (Ay, By) aus zwei Vektoren (A, B) die von den Antennenelementen empfangen werden und mit einer Rechnereinrichtung (1 bis 12) zum Berechnen der Erhöhung aus diesen Komponenten (Ax, Bx, Ay, By), dadurch gekennzeichnet, daß die Rechnereinrichtung eine Einrichtung (3, 4) zum Erzeugen eines Steuersignals in Abhängigkeit von der Phase des ersten (A) der beiden Vektoren (A, B) enthält, eine Einrichtung (5 bis 8) zum Drehen beider Vektoren (A, B) gemäß des Steuersignals in der Weise, daß die Phase des gedrehten, ersten Vektors (A') innerhalb vorbestimmter Grenzen liegt, enthält, und eine Einrichtung (9 bis 18) zum Integrieren der jeweiligen Komponenten (A'x, A'y, B'x, B'y) der gedrehten Vektoren (A', B') enthält.

2. Gerät nach Anspruch 1, dadurch gekennzeichnet, daß die Einrichtung (3, 4) zum Erzeugen derart angeordnet ist, daß das Steuersignal den Quadranten des ersten Vektors (A) darstellt.

3. Gerät nach Anspruch 1, dadurch gekennzeichnet, daß die Einrichtung (3, 4) zum Erzeugen derart angeordnet ist, daß das Steuersignal den Oktanten des ersten Vektors (A) anzeigt.

4. Gerät nach einem der Ansprüche 1 bis 3, dadurch gekennzeichnet, daß eine Zeitmultiplexschaltung vorgesehen ist, die zwei Auswahlschaltungen (1, 2) mit jeweils zwei Eingängen und einen Generator (F) zum Steuern der beiden Auswahlschaltungen (1, 2) enthält, daß die jeweiligen, in der Phasenrichtung liegenden Komponenten (Ax, Bx) eines jeden Vektors (A, B) den Eingängen der einen Auswahlschaltung (1) zugeführt werden, und daß die jeweils senkrecht zur Phasenrichtung liegenden Komponenten (Ay, By) jedes Vektors (A, B) den Eingängen der anderen Auswahlschaltung (2) zugeführt werden.

5. Gerät nach einem der Ansprüche 1 bis 4, dadurch gekennzeichnet, daß die Einrichtung (3, 4) zum Erzeugen eines ersten Steuersignals in Abhängigkeit von der Phase des ersten Vektors (A) eine logische Schaltung (3, 4) aufweist, die an beide Auswahlschaltungen (1, 2) angeschlossen ist, um ein digitales Steuersignal auf der Basis der Vorzeichen der Komponenten sowie des höchstrangigen Bits des ersten Vektors (A) zu erzeugen, und ein Register (5) aufweist, um zeitweilig das digitale Steuersignal zu speichern.

6. Gerät nach Anspruch 5, gekennzeichnet durch eine dritte Auswahlschaltung (6), deren Eingänge an die logische Schaltung (3, 4) und an das Register (5) angeschlossen sind, wobei die Auswahlschaltung (6) durch den Generator (F) gesteuert wird.

7. Gerät nach Anspruch 6, dadurch gekennzeichnet, daß die Einrichtung (5 bis 8) zum Drehen beider Vektoren (A, B) zwei Dreheinheiten (7, 8) enthält, die jeweils an die erste, zweite und dritte Auswahlschaltung (1, 2, 6) angeschlossen sind, um eine Operation der linearen Kombination der jeweiligen, in Phasenrichtung liegenden und senkrecht zur Phasenrichtung liegenden Komponenten (Ax, Bx; Ay, By) gemäß des Steuersignals auszuführen.

8. Gerät nach Anspruch 7, dadurch gekennzeichnet, daß jede Dreheinheit (7, 8) einen programmierbaren Festwertspeicher enthält.

9. Gerät nach Anspruch 7 oder 8, gekennzeichnet durch zwei Register (9, 10), von denen jedes an jeweils eine der Dreheinheiten (7, 8) zum Kompensieren der Verarbeitungsverzögerungen der Einheiten (7, 8) angeschlossen ist.

10. Gerät nach einem der Ansprüche 6 bis 8, dadurch gekennzeichnet, daß die Einrichtung (9 bis 18) zum Integrieren zwei integrierende Einheiten (11, 12) und einen Speicher (13) zum Speichern der Teilsummen enthält.

**Revendications**

1. Dispositif pour calculer le site dans un radar MTI tri-dimensionnel comprenant deux éléments d'antenne, des moyens pour prélever des composantes en phase (Ax, Bx) et des composantes en quadrature (Ay, By) de deux vecteurs (A, B) reçus des éléments d'antenne, et des moyens de calcul (1—12) pour extraire le site de ces composantes (Ax, Bx; Ay, By), caractérisé par le fait que les moyens de calcul comprennent des moyens (3, 4) générant un signal de commande fonction de la phase d'un premier (A) de ces deux vecteurs (A, B) des moyens (5 à 8) pour faire tourner les deux vecteurs (A, B) en fonction dudit signal de commande de façon que la phase du premier vecteur tourné (A') se situe dans des limites prédéterminées, et des moyens (9 à 18) pour intégrer les composantes respectives (A'x, A'y, B'x, B'y) des vecteurs (A', B') tournés.

2. Dispositif selon la revendication 1, caractérisé par le fait que lesdits moyens générateurs (3, 4) sont agencés pour que le signal de commande soit indicatif du quadrant du premier vecteur (A).

3. Dispositif selon la revendication 1, caractérisé par le fait que lesdits moyens générateurs (3, 4) sont agencés pour que le signal de commande soit indicatif de l'octant du premier vecteur (A).

4. Dispositif selon l'une des revendications 1 à 3, caractérisé par le fait qu'il est prévu un circuit multiplexeur dans le temps comprenant deux sélecteurs (1, 2) ayant chacun deux entrées, et un générateur (F) commandant les deux sélecteurs (1, 2), que les composantes en phase respectives (Ax, Bx) de chacun des vecteurs (A, B) sont appliquées aux entrées d'un sélecteur (1), et que les composantes en quadrature respectives (Ay, By) de chacun des vecteurs A, B) sont appliquées aux entrées de l'autre sélecteur (2).

5. Dispositif selon l'une des revendications 1 à 4, caractérisé par le fait que le moyens (3, 4) générateurs d'un signal de commande fonction de la phase du premier vecteur (A), comprennent un circuit logique (3, 4) relié aux deux sélecteurs (1, 2) générant un signal de commande numérique basé sur les signes des composantes et les bits les plus significatifs du premier vecteur (A), et un registre (5) permettent de stocker momentanément ledit signal numérique de commande.

6. Dispositf selon la revendication 5, caractérisé par le fait qu'il comprend en outre un troisième sélecteur (6), dont les entrées sont reliées au circuit logique (3, 4) et au registre (5), ce sélecteur (6) étant commandé par le générateur (F).

7. Dispositif selon la revendication 6, caractérisé par le fait que les dispositifs (5 à 8) pour de faire tourner les deux vecteurs (A, B) comprennent deux unités de rotation (7, 8) connectées chacune au premier, au second et au troisième des sélecteurs (1, 2, 6) de façon à effectuer une opération de combinaison linéaire des composantes en phase et en quadrature respectives (Ax, Bx; Ay, By) en fonction dudit signal de commande.

8. Dispositif selon la revendication 7, caractérisé par le fait que chaque unité (7, 8) de rotation comprend une mémoire morte programmable.

9. Dispositif selon l'une des revendications 7 ou 8, caractérisé par le fait qu'il comprend deux registres (9, 10) reliés chacun à l'une des unités respectives de rotation (7, 8) afin de compenser les délais de traitement desdites unités (7, 8).

10. Dispositif selon l'une des revendications 6 à 8, caractérisé par le fait que les moyens d'intégration (9 à 18) comprennent deux unités d'intégration (11, 12) et une mémoire (13) assurant le stockage des sommes partielles.

Fig. 1

Fig. 2

Fig. 3

Fig. 4

Fig. 5

0 033 059

Fig. 6

a)    C

b)    F

c)

FIG 7

Fig. 8